# EUROPEAN PATENT APPLICATION

(11) **EP 4 586 529 A1**
(43) Date of publication of application: **16.07.2025**
(21) Application number: 22957746.5
(22) Date of filing: 08.09.2022
(51) Int. Cl.: H04L 5/00

(54) **INFORMATION DETERMINATION METHOD/APPARATUS/DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2022/117885
(87) International publication number: WO 2024/050774

(57) **Abstract**

The present disclosure provides an information determination method/apparatus/device and a storage medium. The method comprises: receiving indication information, the indication information being used for indicating at least one joint transmission configuration indicator state (joint TCI state); and determining whether the at least one joint TCI state is used for transmission of an uplink channel and/or an uplink signal. The present disclosure provides a method for a terminal device to determine whether a joint TCI state indicated by a network device is used for transmission of an uplink channel and/or an uplink signal, wherein when determining that the joint TCI state indicated by the network device is not used for the transmission of the uplink channel and/or the uplink signal, the terminal device does not use the joint TCI state for the transmission of the uplink channel and/or the uplink signal, and only when determining that the joint TCI state indicated by the network device is used for the transmission of the uplink channel and/or the uplink signal, the terminal device uses the joint TCI state for the transmission of the uplink channel and/or the uplink signal. Thus, the transmission performance of Multi-TRP-based coherent joint transmission is improved.

## Description

### TECHNICAL FIELD

The present disclosure relates to the field of communication technology, and more particularly to a method/apparatus/device for determining information and a storage medium.

### BACKGROUND

In a multiple-input multiple-output (MIMO) system, a coherent joint transmission (CJT) implemented by a plurality of transmission reception points (TRPs) with an ideal backhaul connection is introduced. Furthermore, currently, a single-TRP situation has been considered for a unified transmission configuration indicator (TCI) state. Specifically, the unified TCI state means the same set of TCI states indicated for a plurality of channels/signals of one TRP, and the same set of TCI states may currently be indicated separately for an uplink and a downlink, that is, indicating a downlink (DL) TCI state and/or an uplink (UL) TCI state respectively, or may be indicated jointly for an uplink and a downlink, that is, indicating a joint TCI state. Furthermore, a terminal may receive a downlink channel and/or a downlink signal based on an indicated joint TCI state and/or a DL TCI state, and send an uplink channel and/or an uplink signal based on the indicated joint TCI state and/or a UL TCI state.

In the related art, the MIMO system may currently support a CJT of up to 4 TRPs, and a network device may indicate up to 4 TCI states to the terminal. In a case that the network device indicates one or more joint TCI states to the terminal, the terminal may perform a physical uplink control channel (PUCCH) transmission, a physical uplink shared channel (PUSCH) transmission, and a UL Tx spatial filter of a sounding reference signal (SRS) based on quasi co-location (QCL) information corresponding to reference signals of the joint TCI states.

However, it should be noted that, for the UL Tx spatial filter of the SRS and/or a PUSCH, a joint TCI state may only be used for the UL Tx spatial filter of the SRS and/or the PUSCH in a case that a reference signal of the joint TCI state corresponds to QCL Type D. However, in a CJT case, it is applicable to frequency range 1 (FR1). At this time, QCL information included in a joint TCI state mainly includes QCL Type A and/or QCL Type B, which cannot be used for the UL Tx spatial filter. Therefore, how to let the terminal know which joint TCI states cannot be used for the UL Tx spatial filter is a problem that needs to be solved.

### SUMMARY

A method/apparatus/device for determining information and a storage medium are provided in the present disclosure, for a terminal to determine which joint TCI states are not used for transmissions of uplink channels and/or uplink signals.

In a first aspect, embodiments of the present disclosure provide a method for determining information, which is performed by a terminal and includes: receiving indication information, in which the indication information indicates at least one joint transmission configuration indicator (TCI) state; and determining whether the at least one joint TCI state is used for a transmission of an uplink channel and/or an uplink signal.

In the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by a network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

In a second aspect, embodiments of the present disclosure provide a method for determining information, which is performed by a network device and includes: sending indication information, in which the indication information indicates at least one joint TCI state.

In a third aspect, embodiments of the present disclosure provide a communication apparatus, which is configured in a terminal and includes: a transceiving module configured to receive indication information, in which the indication information indicates at least one joint TCI state; and a processing module configured to determine whether the at least one joint TCI state is used for a transmission of an uplink channel and/or an uplink signal.

In a fourth aspect, embodiments of the present disclosure provide a communication apparatus, which is configured in a network device and includes: a transceiving module configured to send indication information, in which the indication information indicates at least one joint TCI state.

In a fifth aspect, embodiments of the present disclosure provide a communication apparatus, which includes a processor. When the processor invokes a computer program in a memory, the method according to the first aspect described above is implemented.

In a sixth aspect, embodiments of the present disclosure provide a communication apparatus, which includes a processor. When the processor invokes a computer program in a memory, the method according to the second aspect described above is implemented.

In a seventh aspect, embodiments of the present disclosure provide a communication apparatus, which includes a processor and a memory having stored therein a computer program. The processor is configured to execute the computer program stored in the memory, to cause the communication apparatus to implement the method according to the first aspect described above.

In an eighth aspect, embodiments of the present disclosure provide a communication apparatus, which includes a processor and a memory having stored therein a computer program. The processor is configured to execute the computer program stored in the memory, to cause the communication apparatus to implement the method according to the second aspect described above.

In a ninth aspect, embodiments of the present disclosure provide a communication apparatus, which includes a processor and an interface circuit. The interface circuit is configured to receive a code instruction and transmit the code instruction to the processor, and the processor is configured to run the code instruction to cause the apparatus to implement the method according to the first aspect described above.

In a tenth aspect, embodiments of the present disclosure provide a communication apparatus, which includes a processor and an interface circuit. The interface circuit is configured to receive a code instruction and transmit the code instruction to the processor, and the processor is configured to run the code instruction to cause the apparatus to implement the method according to the second aspect described above.

In an eleventh aspect, embodiments of the present disclosure provide a communication system, which includes the communication apparatus according to the third aspect and the communication apparatus according to the fourth aspect, or the communication apparatus according to the fifth aspect and the communication apparatus according to the sixth aspect, or the communication apparatus according to the seventh aspect and the communication apparatus according to the eighth aspect, or the communication apparatus according to the ninth aspect and the communication apparatus according to the tenth aspect.

In a twelfth aspect, embodiments of the present disclosure provide a computer-readable storage medium for storing instructions used by the above network device. The instructions, when executed, cause the terminal to implement the method according to any one of the first aspect to the second aspect described above.

In a thirteenth aspect, the present disclosure further provides a computer program product, which includes a computer program that, when run on a computer, causes the computer to implement the method according to any one of the first aspect to the second aspect described above.

In a fourteenth aspect, the present disclosure provides a chip system, which includes at least one processor and an interface, for supporting a network device to implement functions involved in the method according to any one of the first aspect to the second aspect, for example, determining or processing at least one of data or information involved in the above method. In a possible design, the chip system further includes a memory for storing computer programs and data of primary and secondary nodes. The chip system may include chips, or may include chips and other discrete devices.

In a fifteenth aspect, the present disclosure provides a computer program that, when run on a computer, causes the computer to implement the method according to any one of the first aspect to the second aspect described above.

### BRIEF DESCRIPTION OF THE DRAWINGS

The above and/or additional aspects and advantages of the present disclosure will become apparent and more readily appreciated from the following descriptions of embodiments made with reference to the accompanying drawings.
FIG. 1 is a schematic diagram of an architecture of a communication system according to an embodiment of the present disclosure.
FIG. 2 is a schematic flow chart of a method for determining information according to another embodiment of the present disclosure.
FIG. 3 is a schematic flow chart of a method for determining information according to yet another embodiment of the present disclosure.
FIG. 4 is a schematic flow chart of a method for determining information according to a further embodiment of the present disclosure.
FIG. 5 is a schematic flow chart of a method for determining information according to a further embodiment of the present disclosure.
FIG. 6 is a schematic flow chart of a method for determining information according to a further embodiment of the present disclosure.
FIG. 7 is a schematic flow chart of a method for determining information according to a further embodiment of the present disclosure.
FIG. 8 is a schematic flow chart of a method for determining information according to an embodiment of the present disclosure.
FIG. 9 is a schematic flow chart of a method for determining information according to another embodiment of the present disclosure.
FIGS. 10a-10e are schematic flow charts of a method for determining information according to yet another embodiment of the present disclosure.
FIG. 11 is a schematic flow chart of a method for determining information according to a further embodiment of the present disclosure.
FIG. 12 is a schematic flow chart of a method for determining information according to a further embodiment of the present disclosure.
FIG. 13 is a schematic flow chart of a method for determining information according to a further embodiment of the present disclosure.
FIG. 14 is a schematic flow chart of a method for determining information according to a further embodiment of the present disclosure.
FIG. 15 is a schematic flow chart of a method for determining information according to a further embodiment of the present disclosure.
FIG. 16 is a schematic flow chart of a method for determining information according to a further embodiment of the present disclosure.
FIG. 17 is a schematic flow chart of a method for determining information according to a further embodiment of the present disclosure.
FIG. 18 is a schematic flow chart of a method for determining information according to a further embodiment of the present disclosure.
FIG. 19 is a schematic flow chart of a method for determining information according to a further embodiment of the present disclosure.
FIG. 20 is a schematic block diagram of a communication apparatus according to a further embodiment of the present disclosure.
FIG. 21 is a schematic block diagram of a communication apparatus according to a further embodiment of the present disclosure.
FIG. 22 is a block diagram of a communication apparatus according to an embodiment of the present disclosure.
FIG. 23 is a schematic block diagram of a chip according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present disclosure. Instead, they are merely examples of devices and methods consistent with some aspects of embodiments of the present disclosure as recited in the appended claims.

Terms used herein in embodiments of the present disclosure are only for the purpose of describing specific embodiments, but should not be construed to limit embodiments of the present disclosure. As used in embodiments of the present disclosure and the appended claims, "a/an" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

Embodiments of the present disclosure will be described in detail below, and examples of embodiments are illustrated in the drawings. The same or similar elements are denoted by like reference numerals throughout the descriptions. Embodiments described herein with reference to drawings are explanatory, serve to explain the present disclosure, and cannot be construed to limit embodiments of the present disclosure.

For ease of understanding, terms involved in the present disclosure are first introduced.

### 1. Unified transmission configuration indicator state (unified TCI state)

The unified TCI state includes a joint TCI state and/or a separate TCI state. The joint TCI state specifically includes a certain TCI state that is used for both uplink sending and downlink receiving, and the separate TCI state specifically includes a certain TCI state that is used for uplink sending or downlink receiving. The separate TCI state includes the joint TCI state and a UL TCI state. The joint TCI state is used for downlink receiving and the UL TCI state is used for uplink sending.

### 2. Physical uplink control channel (PUCCH)

The PUCCH is configured to carry uplink control information, mainly carrying a scheduling request, a hybrid automatic repeat request (HARQ) acknowledgement (ACK)/negative acknowledgement (NACK), and channel state information (CSI) includes a channel quality indicator (CQI), a precoding matrix indicator (PMI), a level indicator (LI) and a rank indication (RI), etc.

### 3. Physical uplink shared channel (PUSCH)

The PUSCH is configured to carry uplink data.

In order to better understand a method for determining information disclosed in embodiments of the present disclosure, a communication system to which embodiments of the present disclosure are applicable is first described below.

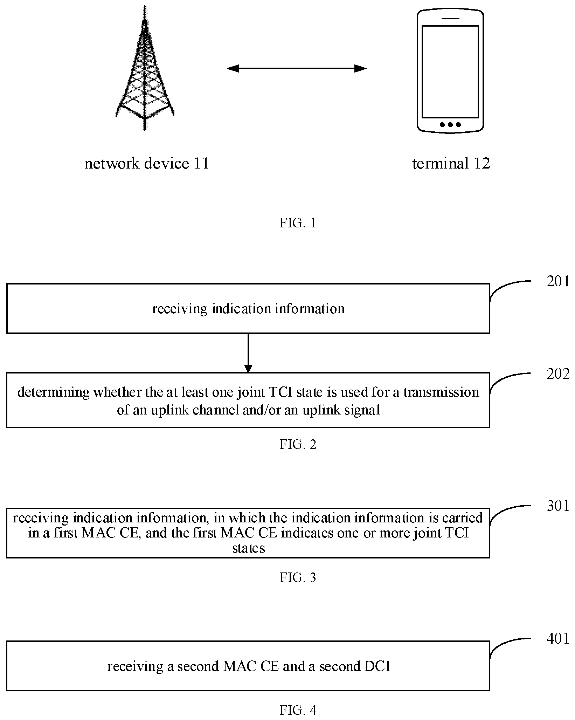

FIG. 1 is a schematic diagram of an architecture of a communication system according to an embodiment of the present disclosure. Referring to FIG. 1, the communication system may include, but is not limited to, one network device and one terminal. The number and forms of the devices shown in FIG. 1 are only as an example and do not constitute a limitation on embodiments of the present disclosure. The communication system may include two or more network devices and two or more terminals in practical applications. As an example for illustration, the communication system shown in FIG. 1 includes one network device 11 and one terminal 12.

It should be noted that the technical solutions of embodiments of the present disclosure may be applied to various communication systems, for example, a long term evolution (LTE) system, a 5th generation (5G) mobile communication system, a 5G new radio (NR) system, or other future new mobile communication systems.

The network device 11 in embodiments of the present disclosure is an entity on a network side for sending or receiving signals. For example, the network device 11 may be an evolved NodeB (eNB), a transmission reception point (TRP), a radio remote head (RRH), a next generation NodeB (gNB) in a NR system, a base station in other future mobile communication systems, or an access node in a wireless fidelity (Wi-Fi) system. The specific technology and specific device form adopted by the network device are not limited in embodiments of the present disclosure. The network device provided by embodiments of the present disclosure may be composed of a central unit (CU) and distributed units (DU). The CU may also be called a control unit. Using the CU-DU structure allows to split a protocol layer of the network device, such as the base station, so that some of functions of the protocol layer are centrally controlled in the CU, some or all of the remaining functions of the protocol layer are distributed in the DUs, and the CU centrally controls the DUs.

The terminal 12 in embodiments of the present disclosure is an entity on a user side for receiving or sending signals, such as a mobile phone. The terminal may also be called a terminal device, a user equipment (UE), a mobile station (MS), a mobile terminal (MT), and so on. The terminal may be a device with a communication function, such as a car, a smart car, a mobile phone, a wearable device, a tablet Pad, a computer with a wireless transceiving function, a virtual reality (VR) terminal, an augmented reality (AR) terminal, a wireless terminal in an industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. The specific technology and the specific device form adopted by the terminal are not limited in embodiments of the present disclosure.

It may be understood that the communication system described in embodiments of the present disclosure is intended to illustrate the technical solutions of embodiments of the present disclosure more clearly, and does not constitute a limitation on the technical solutions provided by embodiments of the present disclosure. Those of ordinary skill in the art will know that with an evolution of a system architecture and an emergence of a new service scenario, the technical solutions provided by embodiments of the present disclosure are also applicable to similar technical problems.

A method/apparatus/device for determining information and a storage medium provided by embodiments of the present disclosure are described in detail below with reference to the accompanying drawings.

FIG. 2 is a schematic flow chart of a method for determining information according to an embodiment of the present disclosure. The method is performed by a terminal. As shown in FIG. 2, the method for determining the information may include the following steps.

In step 201, indication information is received.

In an embodiment of the present disclosure, at least one joint TCI state indicated by the indication information may be a TCI state used for a physical downlink shared channel (PDSCH) transmission.

Furthermore, in an embodiment of the present disclosure, the joint TCI state may include quasi co-location type A (QCL Type A) and/or QCL Type B. The QCL Type A may include {an average delay, a delay spread, a Doppler shift, a Doppler spread}. The QCL Type B may include {a Doppler shift, a Doppler spread}.

In another embodiment of the present disclosure, the joint TCI state may include a quasi co-location type, and the quasi co-location type includes at least one of the following parameters: an average delay; a delay spread; a Doppler shift; or a Doppler spread.

In another embodiment of the present disclosure, the joint TCI state may also include a path loss reference signal identifier and/or an uplink power control identifier. The path loss reference signal identifier indicates a path loss reference signal, and the uplink power control identifier indicates uplink power control information.

In step 202, it is determined whether the at least one joint TCI state is used for a transmission of an uplink channel and/or an uplink signal.

In an embodiment of the present disclosure, the uplink channel may include a PUSCH and/or a PUCCH. The uplink signal may include an SRS and/or a demodulation reference signal (DMRS).

Furthermore, a detailed introduction of how the indication information in the above step 201 specifically indicates the at least one joint TCI state and how the terminal in the step 202 specifically determines whether the at least one joint TCI state is used for the transmission of the uplink channel and/or the uplink signal will be described in subsequent embodiments.

To summarize, in the method for determining the information provided by the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by a network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 3 is a schematic flow chart of a method for determining information according to an embodiment of the present disclosure. The method is performed by a terminal. As shown in FIG. 3, the method for determining the information may include a following step.

In step 301, indication information is received. The indication information is carried in a first medium access control control element (MAC CE), and the first MAC CE indicates one or more joint TCI states.

In an embodiment of the present disclosure, the first MAC CE may indicate the one or more joint TCI states by indicating an ID of a TCI state.

Furthermore, in an embodiment of the present disclosure, a corresponding relationship exists between TCI states and codepoints, and TCI states indicated by the first MAC CE correspond to the same codepoint. An information field corresponding to the codepoint is carried in first downlink control information (DCI). For example, in an embodiment of the present disclosure, the information field corresponding to the codepoint may be a TCI field of the first DCI, and the above "information field corresponding to the codepoint" may be understood as: an information field configured to carry the codepoint. Furthermore, it should be noted that, in embodiments of the present disclosure, in a case that the TCI states indicated by the first MAC CE correspond to the same codepoint, and the information field corresponding to the codepoint is carried in the first DCI, the first DCI may be sent to the terminal to indicate the codepoint to the terminal, or may not be sent to the terminal and not indicate the codepoint to the terminal.

For example, in an embodiment of the present disclosure, it is assumed that TCI states corresponding to codepoint "000" are: a joint TCI state with an ID of "2" and a joint TCI state with an ID of "3". The first MAC CE may indicate the joint TCI state with the ID of "2" and the joint TCI state with the ID of "3", and an information field corresponding to the codepoint "000" corresponding to the joint TCI state with the ID of "2" and the joint TCI state with the ID of "3" is the TCI field of the first DCI.

To summarize, in the method for determining the information provided by the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by a network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 4 is a schematic flow chart of a method for determining information according to an embodiment of the present disclosure. The method is performed by a terminal. As shown in FIG. 4, the method for determining the information may include a following step.

In step 401, a second MAC CE and a second DCI are received.

In an embodiment of the present disclosure, the second MAC CE carries the above indication information, the second MAC CE may indicate one or more joint TCI states corresponding to a plurality of codepoints respectively, and the second DCI may indicate one codepoint of the plurality of codepoints. The second DCI may use a TCI field to indicate the codepoint.

In an embodiment of the present disclosure, the second MAC CE may indicate the one or more joint TCI states by indicating an ID of a TCI state.

For example, in an embodiment of the present disclosure, it is assumed that TCI states corresponding to codepoint "000" are: a joint TCI state with an ID of "2" and a joint TCI state with an ID of "3", and TCI states corresponding to codepoint "001" are: a joint TCI state with an ID of "4". The second MAC CE may indicate the joint TCI state with the ID of "2" and the joint TCI state with the ID of "3" corresponding to the codepoint "000", and the joint TCI state with the ID of "4" corresponding to the codepoint "001", and a TCI field of the second DCI may indicate the codepoint "000" or the codepoint "001".

To summarize, in the method for determining the information provided by the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by a network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

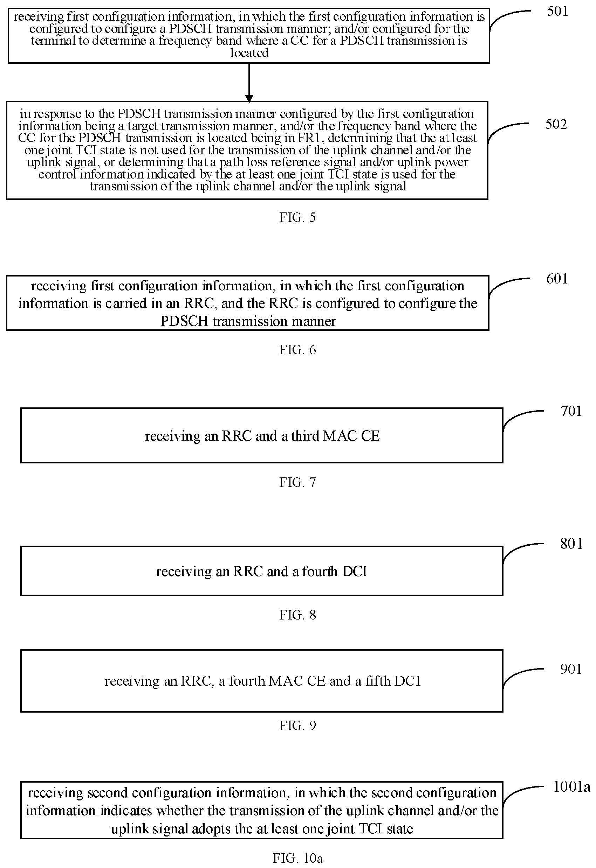

FIG. 5 is a schematic flow chart of a method for determining information according to an embodiment of the present disclosure. The method is performed by a terminal. As shown in FIG. 5, the method for determining the information may include the following steps.

In step 501, first configuration information is received. The first configuration information is configured to configure a PDSCH transmission manner; and/or configured for the terminal to determine a frequency band where a component carrier (CC) for a PDSCH transmission is located.

In step 502, in response to the PDSCH transmission manner configured by the first configuration information being a target transmission manner, and/or the frequency band where the CC for the PDSCH transmission is located being in FR1, it is determined that the at least one joint TCI state is not used for the transmission of the uplink channel and/or the uplink signal, or it is determined that a path loss reference signal and/or uplink power control information indicated by the at least one joint TCI state is used for the transmission of the uplink channel and/or the uplink signal.

In an embodiment of the present disclosure, the target transmission manner may include a CJT. In a CJT transmission, a demodulation reference signal (DMRS) port of a PDSCH and a reference signal (RS) of the at least one joint TCI state are in a QCL relationship. Furthermore, in a CJT case, each channel measurement resource (CMR) corresponds to one TRP/RRH, and each TRP/RRH uses the same time domain resource and frequency domain resource, the same DMRS port, and the same or different TCI state(s) to send the PDSCH to the terminal. Different CMRs are different non-zero power (NZP) CSI-RS resources, or different CMRs are different ports in a plurality of ports of the same NZP CSI-RS resource.

Furthermore, in an embodiment of the present disclosure, a frequency of the above FR1 is between 450 MHz and 6000 MHz.

Furthermore, in an embodiment of the present disclosure, in a case that the PDSCH transmission manner configured by the first configuration information is the CJT, and/or the frequency band where the CC for the PDSCH transmission is located is in the FR1, it may be determined by default that the at least one joint TCI state is not used for the transmission of the uplink channel and/or the uplink signal, or it may also be determined by default that the path loss reference signal and/or the uplink power control information indicated by the at least one joint TCI state is used for the transmission of the uplink channel and/or the uplink signal. A premise of the above "it is determined by default that the path loss reference signal and/or the uplink power control information indicated by the at least one joint TCI state is used for the transmission of the uplink channel and/or the uplink signal" should be that the path loss reference signal and/or the uplink power control information is indicated in the at least one joint TCI state indicated by the network device.

Specifically, in a case that the PDSCH transmission manner configured by the first configuration information is the CJT, and/or the frequency band where the CC for the PDSCH transmission is located is in the FR1, it means that QCL information included in the joint TCI state indicated by the network device mainly includes QCL Type A and/or QCL Type B, which cannot be used for a UL Tx spatial filter. Therefore, it may be determined by default that the at least one joint TCI state indicated by the network device via the indication information is not used for the transmission of the uplink channel and/or the uplink signal.

Furthermore, in a case that the PDSCH transmission manner configured by the first configuration information is the CJT, and/or the frequency band where the CC for the PDSCH transmission is located is in the FR1, at this time, in a case that the at least one joint TCI state indicated by the network device indicates the path loss reference signal and/or the uplink power control information, based on this, although the QCL information included in the joint TCI state indicated by the network device cannot be used for the UL Tx spatial filter, it does not affect that the path loss reference signal and/or the uplink power control information indicated by the at least one joint TCI state of the network device is used for the transmission of the uplink channel and/or the uplink signal. Therefore, it may be determined by default that the path loss reference signal and/or the uplink power control information indicated by the at least one joint TCI state is used for the transmission of the uplink channel and/or the uplink signal.

To summarize, in the method for determining the information provided by the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by the network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 6 is a schematic flow chart of a method for determining information according to an embodiment of the present disclosure. The method is performed by a terminal. As shown in FIG. 6, the method for determining the information may include a following step.

In step 601, first configuration information is received. The first configuration information is carried in a radio resource control (RRC), and the RRC is configured to configure the PDSCH transmission manner.

To summarize, in the method for determining the information provided by the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by a network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 7 is a schematic flow chart of a method for determining information according to an embodiment of the present disclosure. The method is performed by a terminal. As shown in FIG. 7, the method for determining the information may include a following step.

In step 701, an RRC and a third MAC CE are received.

In an embodiment of the present disclosure, the RRC carries the above configuration information, and the RRC is configured to configure the PDSCH transmission manner.

Furthermore, in an embodiment of the present disclosure, the third MAC CE may indicate a numeric count of joint TCI states corresponding to a PDSCH. Alternatively, in another embodiment of the present disclosure, the third MAC CE may indicate one or more joint TCI states, TCI states indicated by the third MAC CE correspond to the same codepoint, and an information field corresponding to the codepoint is included in a third DCI. In a case that the third MAC CE indicates the one or more joint TCI states, a structure of the third MAC CE is similar to a structure of the above first MAC CE, and a structural principle of the third DCI is similar to a structural principle of the above first DCI. Reference may be made to the above content for details.

In addition, it should be noted that, in an embodiment of the present disclosure, the joint TCI state corresponding to the above PDSCH may be specifically understood as: a joint TCI state used for a PDSCH transmission. Furthermore, the numeric count of the joint TCI states corresponding to the PDSCH may be greater than or equal to a numeric count of the at least one joint TCI state indicated by the indication information.

To summarize, in the method for determining the information provided by the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by a network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 8 is a schematic flow chart of a method for determining information according to an embodiment of the present disclosure. The method is performed by a terminal. As shown in FIG. 8, the method for determining the information may include a following step.

In step 801, an RRC and a fourth DCI are received.

In an embodiment of the present disclosure, the RRC carries the above configuration information, and the RRC is configured to configure the PDSCH transmission manner.

Furthermore, in an embodiment of the present disclosure, the fourth DCI may indicate a numeric count of joint TCI states corresponding to a PDSCH. For the relevant introduction about the joint TCI state corresponding to the PDSCH, reference may be made to the description of the above embodiments.

Alternatively, in an embodiment of the present disclosure, the fourth DCI may indicate one codepoint, and the codepoint corresponds to one or more joint TCI states of the joint TCI states indicated by the indication information. For example, the fourth DCI may use a TCI field or other information fields to indicate the codepoint.

For example, it is assumed that the indication information indicates a joint TCI state with an ID of "2" and a joint TCI state with an ID of "3", and the joint TCI state with the ID of "2" and the joint TCI state with the ID of "3" correspond to codepoint "000", then the fourth DCI may use the TCI field to indicate the codepoint "000". Alternatively, it is assumed that the indication information indicates a joint TCI state with an ID of "2" and a joint TCI state with an ID of "3", the joint TCI state with the ID of "2" corresponds to codepoint "00", the joint TCI state with the ID of "3" corresponds to codepoint "01", and the joint TCI state with the ID of "2" and the joint TCI state with the ID of "3" correspond to codepoint "10", then the fourth DCI may use other information fields to indicate the codepoint "00" or "01" or "10". Alternatively, it is assumed that the indication information indicates a joint TCI state with an ID of "2", a joint TCI state with an ID of "3", and a joint TCI state with an ID of "4", in which the joint TCI state with the ID of "2" and the joint TCI state with the ID of "3" correspond to codepoint "00", and the joint TCI state with the ID of "4" corresponds to codepoint "01", then the fourth DCI may use other information fields to indicate the codepoint "00" or the codepoint "01".

In addition, it should be noted that, in an embodiment of the present disclosure, the joint TCI state corresponding to the above PDSCH may be specifically understood as: a joint TCI state used for a PDSCH transmission. Furthermore, the numeric count of the joint TCI states corresponding to the PDSCH may be greater than or equal to a numeric count of the at least one joint TCI state indicated by the indication information.

To summarize, in the method for determining the information provided by the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by a network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 9 is a schematic flow chart of a method for determining information according to an embodiment of the present disclosure. The method is performed by a terminal. As shown in FIG. 9, the method for determining the information may include a following step.

In step 901, an RRC, a fourth MAC CE and a fifth DCI are received.

In an embodiment of the present disclosure, the RRC carries the above configuration information, and the RRC is configured to configure the PDSCH transmission manner.

In addition, in an embodiment of the present disclosure, the fourth MAC CE may indicate at least one first value, and the first value is a candidate value of a numeric count of joint TCI states corresponding to a PDSCH; and the fifth DCI indicates one codepoint, and the codepoint corresponds to one first value. Optionally, the first value corresponding to the codepoint may specifically be an actual numeric count of the joint TCI states corresponding to the PDSCH.

From the above content, it may be seen that a corresponding relationship exists between the codepoint and the above candidate value. Furthermore, combined with the above content, it may be seen that a corresponding relationship also exists between the codepoint and the TCI state. Based on this, in order to distinguish the two codepoints, in an embodiment of the present disclosure, the codepoint having the corresponding relationship with the candidate value and the codepoint having the corresponding relationship with the TCI state are indicated by different fields of the DCI (such as the first DCI to the fifth DCI mentioned above). For example, the codepoint having the corresponding relationship with the TCI state is indicated by the TCI field of the DCI, and the codepoint having the corresponding relationship with the candidate value is indicated by other fields of the DCI except the TCI field. Based on this, after receiving the DCI, the terminal may determine that the codepoint carried by the TCI field of the DCI corresponds to the TCI state, and that the codepoint carried by other fields of the DCI except the TCI field corresponds to the candidate value.

For example, it is assumed that the codepoint having the corresponding relationship with the candidate value is indicated by a first field of the DCI except the TCI field, and based on this, it is assumed that the candidate value of the numeric count of the joint TCI states corresponding to the PDSCH includes 2, 3, and 4, in which the candidate value "2" corresponds to codepoint "00", the candidate value "3" corresponds to codepoint "01", and the candidate value "4" corresponds to codepoint "10", and the actual numeric count of the joint TCI states corresponding to the PDSCH is 3, then the fourth MAC CE may indicate 2, 3, or 4, and the first field of the fifth DCI may indicate the codepoint "01".

In another embodiment of the present disclosure, the fourth MAC CE may indicate one or more joint TCI states corresponding to a plurality of codepoints respectively, and the fifth DCI may indicate one codepoint of the plurality of codepoints. A structure of the fourth MAC CE may be similar to a structure of the aforementioned second MAC CE, and a structure of the fifth DCI may be similar to a structure of the aforementioned second DCI. For a detailed introduction, reference may be made to the above description.

To summarize, in the method for determining the information provided by the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by a network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 10a is a schematic flow chart of a method for determining information according to an embodiment of the present disclosure. The method is performed by a terminal. As shown in FIG. 10a, the method for determining the information may include a following step.

In step 1001a, second configuration information is received. The second configuration information indicates whether the transmission of the uplink channel and/or the uplink signal adopts the at least one joint TCI state.

In an embodiment of the present disclosure, the second configuration information may be sent by the network device to the terminal, and the second configuration information may include at least one of: an RRC; an MAC CE; or a DCI.

To summarize, in the method for determining the information provided by the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by a network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

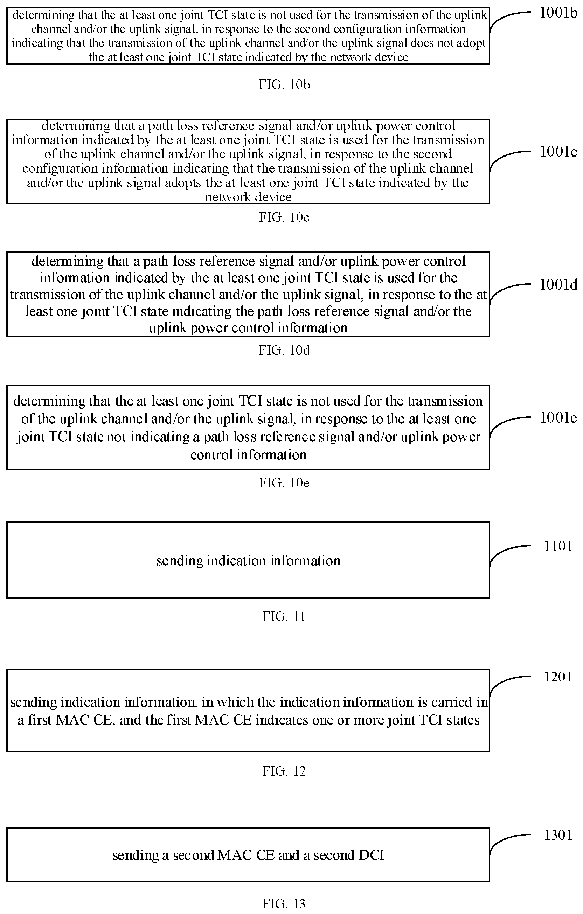

FIG. 10b is a schematic flow chart of a method for determining information according to an embodiment of the present disclosure. The method is performed by a terminal. As shown in FIG. 10b, the method for determining the information may include a following step.

In step 1001b, it is determined that the at least one joint TCI state is not used for the transmission of the uplink channel and/or the uplink signal, in response to the second configuration information indicating that the transmission of the uplink channel and/or the uplink signal does not adopt the at least one joint TCI state indicated by the network device.

In an embodiment of the present disclosure, the above second configuration information indicating that the transmission of the uplink channel and/or the uplink signal does not adopt the at least one joint TCI state indicated by the network device may be sent to the terminal in a case that the network device determines that a PDSCH transmission manner is a target transmission manner (such as the CJT), and/or a frequency band where a CC for a PDSCH transmission is located is in FR1.

To summarize, in the method for determining the information provided by the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by the network device is used for the transmission of the uplink channel and/or the uplink signal. The joint TCI state may not be used for the transmission of the uplink channel and/or the uplink signal in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 10c is a schematic flow chart of a method for determining information according to an embodiment of the present disclosure. The method is performed by a terminal. As shown in FIG. 10c, the method for determining the information may include a following step.

In step 1001c, it is determined that a path loss reference signal and/or uplink power control information indicated by the at least one joint TCI state is used for the transmission of the uplink channel and/or the uplink signal, in response to the second configuration information indicating that the transmission of the uplink channel and/or the uplink signal adopts the at least one joint TCI state indicated by the network device.

In an embodiment of the present disclosure, the above second configuration information indicating that the path loss reference signal and/or the uplink power control information indicated by the at least one joint TCI state is used for the transmission of the uplink channel and/or the uplink signal may be sent to the terminal, in a case that the network device determines that the path loss reference signal and/or the uplink power control information is indicated in the at least one joint TCI state indicated by the network device.

To summarize, in the method for determining the information provided by the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by the network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 10d is a schematic flow chart of a method for determining information according to an embodiment of the present disclosure. The method is performed by a terminal. As shown in FIG. 10d, the method for determining the information may include a following step.

In step 1001d, it is determined that a path loss reference signal and/or uplink power control information indicated by the at least one joint TCI state is used for the transmission of the uplink channel and/or the uplink signal, in response to the at least one joint TCI state indicating the path loss reference signal and/or the uplink power control information.

To summarize, in the method for determining the information provided by the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by a network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 10e is a schematic flow chart of a method for determining information according to an embodiment of the present disclosure. The method is performed by a terminal. As shown in FIG. 10e, the method for determining the information may include a following step.

In step 1001e, it is determined that the at least one joint TCI state is not used for the transmission of the uplink channel and/or the uplink signal, in response to the at least one joint TCI state not indicating a path loss reference signal and/or uplink power control information.

To summarize, in the method for determining the information provided by the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by a network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

It should be noted that, in the first MAC CE, the second MAC CE, the third MAC CE, the fourth MAC CE and the MAC CE serving as the second configuration information in the present disclosure, any two or more MAC CEs may be different MAC CEs, or the same MAC CE. Similarly, in the first DCI, the second DCI, the third DCI, the fourth DCI, the fifth DCI and the DCI serving as the second configuration information in the present disclosure, any two or more DCIs may be different DCIs, or the same DCI. Furthermore, the RRC carrying the first configuration information and the RRC serving as the second configuration information in the present disclosure may be different RRCs, or the same RRC.

FIG. 11 is a schematic flow chart of a method for determining information according to an embodiment of the present disclosure. The method is performed by a network device. As shown in FIG. 11, the method for determining the information may include a following step.

In step 1101, indication information is sent.

The indication information indicates at least one joint TCI state.

For a detailed introduction of the step 1101, reference may be made to the description of the above embodiments.

To summarize, in the method for determining the information provided by the present disclosure, the network device may send the indication information to a terminal, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by the network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 12 is a schematic flow chart of a method for determining information according to an embodiment of the present disclosure. The method is performed by a network device. As shown in FIG. 12, the method for determining the information may include a following step.

In step 1201, indication information is sent. The indication information is carried in a first MAC CE, and the first MAC CE indicates one or more joint TCI states.

For a detailed introduction of the step 1201, reference may be made to the description of the above embodiments.

To summarize, in the method for determining the information provided by the present disclosure, the network device may send the indication information to a terminal, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by the network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 13 is a schematic flow chart of a method for determining information according to an embodiment of the present disclosure. The method is performed by a network device. As shown in FIG. 13, the method for determining the information may include a following step.

In step 1301, a second MAC CE and a second DCI are sent.

For a detailed introduction of the step 1301, reference may be made to the description of the above embodiments.

To summarize, in the method for determining the information provided by the present disclosure, the network device may send the indication information to a terminal, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by the network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

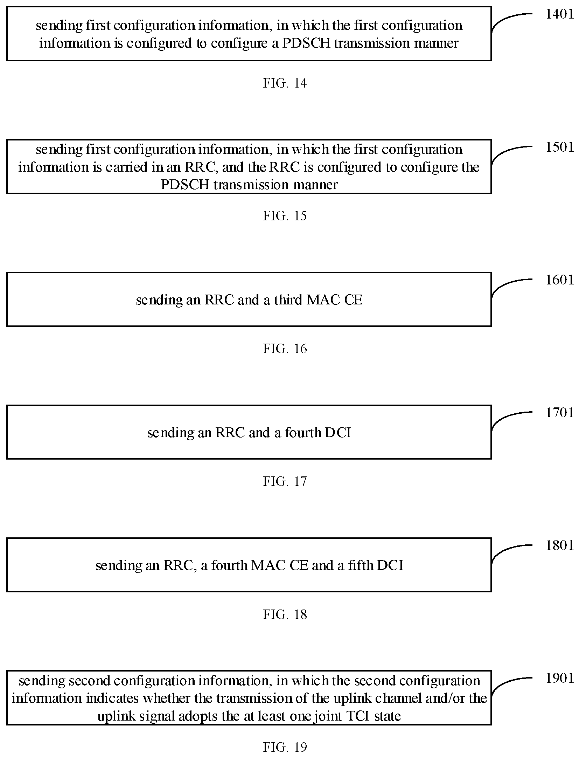

FIG. 14 is a schematic flow chart of a method for determining information according to an embodiment of the present disclosure. The method is performed by a network device. As shown in FIG. 14, the method for determining the information may include a following step.

In step 1401, first configuration information is sent. The first configuration information is configured to configure a PDSCH transmission manner.

For a detailed introduction of the step 1401, reference may be made to the description of the above embodiments.

To summarize, in the method for determining the information provided by the present disclosure, the network device may send the indication information to a terminal, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by the network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 15 is a schematic flow chart of a method for determining information according to an embodiment of the present disclosure. The method is performed by a network device. As shown in FIG. 15, the method for determining the information may include a following step.

In step 1501, first configuration information is sent. The first configuration information is carried in an RRC, and the RRC is configured to configure the PDSCH transmission manner.

For a detailed introduction of the step 1501, reference may be made to the description of the above embodiments.

To summarize, in the method for determining the information provided by the present disclosure, the network device may send the indication information to a terminal, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by the network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 16 is a schematic flow chart of a method for determining information according to an embodiment of the present disclosure. The method is performed by a network device. As shown in FIG. 16, the method for determining the information may include a following step.

In step 1601, an RRC and a third MAC CE are sent.

For a detailed introduction of the step 1601, reference may be made to the description of the above embodiments.

To summarize, in the method for determining the information provided by the present disclosure, the network device may send the indication information to a terminal, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by the network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 17 is a schematic flow chart of a method for determining information according to an embodiment of the present disclosure. The method is performed by a network device. As shown in FIG. 17, the method for determining the information may include a following step.

In step 1701, an RRC and a fourth DCI are sent.

For a detailed introduction of the step 1701, reference may be made to the description of the above embodiments.

To summarize, in the method for determining the information provided by the present disclosure, the network device may send the indication information to a terminal, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by the network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 18 is a schematic flow chart of a method for determining information according to an embodiment of the present disclosure. The method is performed by a network device. As shown in FIG. 18, the method for determining the information may include a following step.

In step 1801, an RRC, a fourth MAC CE and a fifth DCI are sent.

For a detailed introduction of the step 1801, reference may be made to the description of the above embodiments.

To summarize, in the method for determining the information provided by the present disclosure, the network device may send the indication information to a terminal, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by the network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

FIG. 19 is a schematic flow chart of a method for determining information according to an embodiment of the present disclosure. The method is performed by a network device. As shown in FIG. 19, the method for determining the information may include a following step.

In step 1901, second configuration information is sent. The second configuration information indicates whether the transmission of the uplink channel and/or the uplink signal adopts the at least one joint TCI state.

For a detailed introduction of the step 1901, reference may be made to the description of the above embodiments.

To summarize, in the method for determining the information provided by the present disclosure, the network device may send the indication information to a terminal, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by the network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

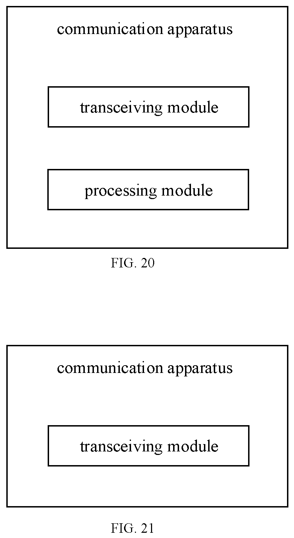

FIG. 20 is a schematic block diagram of a communication apparatus according to an embodiment of the present disclosure. As shown in FIG. 20, the apparatus may include: a transceiving module configured to receive indication information, in which the indication information indicates at least one joint TCI state; and a processing module configured to determine whether the at least one joint TCI state is used for a transmission of an uplink channel and/or an uplink signal.

To summarize, in the communication apparatus provided by embodiments of the present disclosure, the terminal may receive the indication information, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by a network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

Optionally, in an embodiment of the present disclosure, the indication information is carried in a first MAC CE; and the first MAC CE indicates one or more joint TCI states.

Optionally, in an embodiment of the present disclosure, TCI states indicated by the first MAC CE correspond to the same codepoint, and an information field corresponding to the codepoint is included in a first DCI.

Optionally, in an embodiment of the present disclosure, the indication information is carried in a second MAC CE. The second MAC CE indicates one or more joint TCI states corresponding to a plurality of codepoints respectively.

The apparatus is further configured to receive a second DCI. The second DCI indicates one codepoint of the plurality of codepoints.

Optionally, in an embodiment of the present disclosure, the processing module is further configured to: receive first configuration information, in which the first configuration information is configured to configure a PDSCH transmission manner; and/or determine a frequency band where a CC for a PDSCH transmission is located; and in response to the PDSCH transmission manner configured by the first configuration information being a target transmission manner, and/or the frequency band where the CC for the PDSCH transmission is located being in FR1, determine that the at least one joint TCI state is not used for the transmission of the uplink channel and/or the uplink signal, or determine that a path loss reference signal and/or uplink power control information indicated by the at least one joint TCI state is used for the transmission of the uplink channel and/or the uplink signal.

Optionally, in an embodiment of the present disclosure, the target transmission manner includes a CJT.

Optionally, in an embodiment of the present disclosure, the first configuration information is carried in an RRC, and the RRC is configured to configure the PDSCH transmission manner.

Optionally, in an embodiment of the present disclosure, the apparatus is further configured to: receive a third MAC CE. The third MAC CE indicates a numeric count of joint TCI states corresponding to a PDSCH; or, the third MAC CE indicates one or more joint TCI states, TCI states indicated by the third MAC CE correspond to the same codepoint, and an information field corresponding to the codepoint is included in a third DCI.

Optionally, in an embodiment of the present disclosure, the apparatus is further configured to: receive a fourth DCI. The fourth DCI indicates a numeric count of joint TCI states corresponding to a PDSCH; or, the fourth DCI indicates one codepoint, and the codepoint corresponds to one or more joint TCI states of the joint TCI states indicated by the indication information.

Optionally, in an embodiment of the present disclosure, the apparatus is further configured to: receive a fourth MAC CE and a fifth DCI. The fourth MAC CE indicates at least one first value, and the first value is a candidate value of a numeric count of joint TCI states corresponding to a PDSCH; and the fifth DCI indicates one codepoint, and the codepoint corresponds to one first value; or, the fourth MAC CE indicates one or more joint TCI states corresponding to a plurality of codepoints respectively, and the fifth DCI indicates one codepoint of the plurality of codepoints.

Optionally, in an embodiment of the present disclosure, the apparatus is further configured to: receive second configuration information. The second configuration information indicates whether the transmission of the uplink channel and/or the uplink signal adopts the at least one joint TCI state.

Optionally, in an embodiment of the present disclosure, the processing module is further configured to: determine that the at least one joint TCI state is not used for the transmission of the uplink channel and/or the uplink signal, in response to the second configuration information indicating that the transmission of the uplink channel and/or the uplink signal does not adopt the at least one joint TCI state; or determine that a path loss reference signal and/or uplink power control information indicated by the at least one joint TCI state is used for the transmission of the uplink channel and/or the uplink signal, in response to the second configuration information indicating that the transmission of the uplink channel and/or the uplink signal adopts the at least one joint TCI state.

Optionally, in an embodiment of the present disclosure, the second configuration information includes at least one of: an RRC; an MAC CE; or a DCI.

Optionally, in an embodiment of the present disclosure, the processing module is further configured to: determine that a path loss reference signal and/or uplink power control information indicated by the at least one joint TCI state is used for the transmission of the uplink channel and/or the uplink signal, in response to the at least one joint TCI state indicating the path loss reference signal and/or the uplink power control information; or determine that the at least one joint TCI state is not used for the transmission of the uplink channel and/or the uplink signal, in response to the at least one joint TCI state not indicating a path loss reference signal and/or uplink power control information.

Optionally, in an embodiment of the present disclosure, the uplink channel includes a PUSCH and/or a PUCCH; and/or the uplink signal includes an SRS and/or a DMRS.

FIG. 21 is a schematic block diagram of a communication apparatus according to an embodiment of the present disclosure. As shown in FIG. 21, the apparatus may include: a transceiving module configured to send indication information. The indication information indicates at least one joint TCI state.

To summarize, in the communication apparatus provided by embodiments of the present disclosure, the network device may send the indication information to a terminal, in which the indication information indicates the at least one joint TCI state; and the terminal may also determine whether the at least one joint TCI state is used for the transmission of the uplink channel and/or the uplink signal. It may be seen from this that the present disclosure provides a method for the terminal to determine whether the joint TCI state indicated by a network device is used for the transmission of the uplink channel and/or the uplink signal. The joint TCI state may not be used for the transmission of the uplink channel and/or the uplink signal, in a case that the terminal determines that the joint TCI state indicated by the network device is not used for the transmission of the uplink channel and/or the uplink signal. However, the joint TCI state may be used for the transmission of the uplink channel and/or the uplink signal, in a case that the terminal determines that the joint TCI state indicated by the network device is used for the transmission of the uplink channel and/or the uplink signal, thereby improving a transmission performance of a multi-TRP based coherent joint transmission.

Optionally, in an embodiment of the present disclosure, the indication information is carried in a first MAC CE; and the first MAC CE indicates one or more joint TCI states.

Optionally, in an embodiment of the present disclosure, TCI states indicated by the first MAC CE correspond to the same codepoint, and an information field corresponding to the codepoint is included in a first DCI.

Optionally, in an embodiment of the present disclosure, the indication information is carried in a second MAC CE. The second MAC CE indicates one or more joint TCI states corresponding to a plurality of codepoints respectively.

The apparatus is further configured to send a second DCI. The second DCI indicates one codepoint of the plurality of codepoints.

Optionally, in an embodiment of the present disclosure, the apparatus is further configured to: send first configuration information. The first configuration information is configured to configure a PDSCH transmission manner.

Optionally, in an embodiment of the present disclosure, the first configuration information is carried in an RRC; and the RRC is configured to configure the PDSCH transmission manner.

Optionally, in an embodiment of the present disclosure, the apparatus is further configured to: send a third MAC CE. The third MAC CE indicates a numeric count of joint TCI states corresponding to a PDSCH; or, the third MAC CE indicates one or more joint TCI states, TCI states indicated by the third MAC CE correspond to the same codepoint, and an information field corresponding to the codepoint is included in a third DCI.

Optionally, in an embodiment of the present disclosure, the apparatus is further configured to: send a fourth DCI. The fourth DCI indicates a numeric count of joint TCI states corresponding to a PDSCH; or, the fourth DCI indicates one codepoint, and the codepoint corresponds to one or more joint TCI states of the joint TCI states indicated by the indication information.

Optionally, in an embodiment of the present disclosure, the apparatus is further configured to: send a fourth MAC CE and a fifth DCI. The fourth MAC CE indicates at least one first value, and the first value is a candidate value of a numeric count of joint TCI states corresponding to a PDSCH; and the fifth DCI indicates one codepoint, and the codepoint corresponds to one first value; or, the fourth MAC CE indicates one or more joint TCI states corresponding to a plurality of codepoints respectively, and the fifth DCI indicates one codepoint of the plurality of codepoints.

Optionally, in an embodiment of the present disclosure, the apparatus is further configured to: send second configuration information. The second configuration information indicates whether the transmission of the uplink channel and/or the uplink signal adopts the at least one joint TCI state.

Optionally, in an embodiment of the present disclosure, the second configuration information includes at least one of: an RRC; an MAC CE; or a DCI.

Optionally, in an embodiment of the present disclosure, the uplink channel includes a PUSCH and/or a PUCCH; and/or, the uplink signal includes an SRS and/or a DMRS.

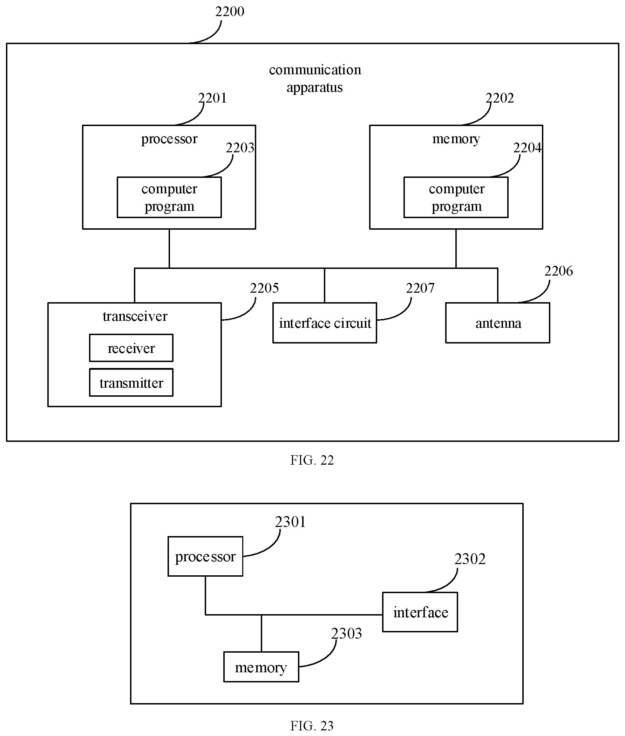

Referring to FIG. 22, FIG. 22 is a schematic block diagram of a communication apparatus 2200 according to an embodiment of the present disclosure, the communication apparatus 2200 may be a network device, may also be a terminal, may also be a chip, a chip system, or a processor that supports the network device to implement the above methods, and may also be a chip, a chip system, or a processor that supports the terminal to implement the above methods. The apparatus may be configured to implement the methods as described in the above method embodiments, and for details thereof, reference may be made to the descriptions in the above method embodiments.

The communication apparatus 2200 may include one or more processors 2201. The processor 2201 may be a general-purpose processor or a special-purpose processor. For example, the processor 2201 may be a baseband processor or a central processing unit. The baseband processor may be configured to process a communication protocol and communication data, and the central processing unit may be configured to control a communication apparatus (such as a base station, a baseband chip, the terminal, a terminal chip, a DU, a CU, or the like), execute computer programs, and process data of computer programs.

Optionally, the communication apparatus 2200 may further include one or more memories 2202 having stored therein a computer program 2204. The processor 2201 executes the computer program 2204, to cause the communication apparatus 2200 to implement the methods as described in the above method embodiments. Optionally, the memory 2202 may have stored therein data. The communication apparatus 2200 and the memory 2202 may be provided separately or integrated together.

Optionally, the communication apparatus 2200 may further include a transceiver 2205 and an antenna 2206. The transceiver 2205 may be called a transceiving element, a transceiving machine, a transceiving circuit or the like, for implementing a transceiving function. The transceiver 2205 may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication apparatus 2200 may further include one or more interface circuits 2207. The interface circuit 2207 is configured to receive a code instruction and transmit the code instruction to the processor 2201. The processor 2201 runs the code instruction to enable the communication apparatus 2200 to execute the methods as described in the above method embodiments.

In an implementation, the processor 2201 may include the transceiver configured to implement receiving and sending functions. For example, the transceiver may be a transceiving circuit, an interface, or an interface circuit. The transceiving circuit, the interface or the interface circuit configured to implement the receiving and transmitting functions may be separated or may be integrated together. The above transceiving circuit, interface or interface circuit may be configured to read or write codes/data, or the above transceiving circuit, interface or interface circuit may be configured to transmit or transfer signals.

In an implementation, the processor 2201 may have stored therein a computer program 2203 that, when run on the processor 2201, causes the communication apparatus 2200 to implement the methods as described in the above method embodiments. The computer program 2203 may be embedded in the processor 2201, and in this case, the processor 2201 may be implemented by hardware.

In an implementation, the communication apparatus 2200 may include a circuit, and the circuit may implement the transmitting, receiving or communicating function in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), a negative metal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus described in the above embodiments may be the network device or the terminal, but the scope of the communication apparatus described in the present disclosure is not limited thereto, and a structure of the communication apparatus is not limited by FIG. 22. The communication apparatus may be a stand-alone device or may be a part of a large device. For example, the communication apparatus may be:
(1) a stand-alone integrated circuit (IC), or a chip, or a chip system or subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld machine, a mobile unit, an on-board device, a network device, a cloud device, an artificial intelligence device, etc.;
(6) others.

For the case where the communication apparatus may be a chip or a chip system, reference may be made to a schematic block diagram of the chip shown in FIG. 23. The chip shown in FIG. 23 includes a processor 2301 and an interface 2302. In the chip, one or more processors 2301 may be provided, and more than one interface 2302 may be provided.

Optionally, the chip further includes a memory 2303 for storing necessary computer programs and data.

Those skilled in the art may also understand that various illustrative logical blocks and steps listed in embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the described functions, but such an implementation should not be understood as extending beyond the protection scope of embodiments of the present disclosure.

The present disclosure further provides a readable storage medium having stored thereon instructions that, when executed by a computer, cause functions of any of the above method embodiments to be implemented.

The present disclosure further provides a computer program product that, when executed by a computer, causes functions of any of the above method embodiments to be implemented.

The above embodiments may be implemented in whole or in part by software, hardware, firmware or any combination thereof. When implemented using software, the above embodiments may be implemented in whole or in part in a form of the computer program product. The computer program product includes one or more computer programs. When the computer program is loaded and executed on the computer, all or some of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as an infrared manner, a cordless manner, via microwave, or the like). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), a semiconductor medium (for example, a solid state disk (SSD)), or the like.

Those of ordinary skill in the art may understand that the first, second, and other numeral numbers involved in the present disclosure are distinguished only for convenience of description, and are not intended to limit the scope of embodiments of the present disclosure, and nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical feature, the technical features in this kind of technical feature are distinguished by terms like "first", "second", "third", "A", "B", "C" and "D", etc., and these technical features described with the "first", "second", "third", "A", "B", "C" and "D" have no order of precedence or size.

The correspondence shown in each table in the present disclosure may be configured or predefined. The values of information in each table are just examples, and may be configured as other values, which are not limited in the present disclosure. When configuring a correspondence between the information and various parameters, it is not necessary to configure all the correspondences shown in the tables. For example, the correspondences shown in some rows of the tables in the present disclosure may not be configured. For another example, appropriate variations or adjustments (such as splitting, merging, and so on) may be made based on the above tables. The names of parameters shown in the titles of the above tables may also adopt other names understandable by the communication apparatus, and the values or representations of the parameters may also be other values or representations understandable by the communication apparatus. When the above tables are implemented, other data structures may also be used, for example, arrays, queues, containers, stacks, linear tables, pointers, linked lists, trees, graphs, structural bodies, classes, heaps, or hash tables may be used.

The term "predefinition" in the present disclosure may be understood as definition, pre-definition, storage, pre-storage, pre-negotiation, pre-configuration, curing, or pre-firing.

Those of ordinary skill in the art may appreciate that the units and algorithm steps of various examples described in conjunction with embodiments disclosed herein may be implemented by electronic hardware, or a combination of computer software and electronic hardware. Whether these functions are executed by hardware or software depends on the specific applications and design constraints of the technical solution. For each particular application, those skilled in the art may use different methods to implement the described functions, but such an implementation should not be considered as extending beyond the scope of the present disclosure.

Those skilled in the art may clearly understand that for the convenience and brevity of the description, for the specific working process of the above-described system, device and unit, reference may be made to the corresponding process in the foregoing method embodiments, which will not be repeated here.

The above only describes some specific implementations of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

## Claims

1. A method for determining information, performed by a terminal, comprising:
receiving indication information, wherein the indication information indicates at least one joint transmission configuration indicator (TCI) state; and
determining whether the at least one joint TCI state is used for a transmission of an uplink channel and/or an uplink signal.

2. The method according to claim 1, wherein the indication information is carried in a first medium access control control element (MAC CE); and the first MAC CE indicates one or more joint TCI states.

3. The method according to claim 2, wherein TCI states indicated by the first MAC CE correspond to the same codepoint, and an information field corresponding to the codepoint is comprised in first downlink control information (DCI).

4. The method according to claim 1, wherein the indication information is carried in a second MAC CE, wherein the second MAC CE indicates one or more joint TCI states corresponding to a plurality of codepoints respectively; and
the method further comprises:
receiving a second DCI, wherein the second DCI indicates one codepoint of the plurality of codepoints.

5. The method according to claim 1, wherein determining whether the at least one joint TCI state is used for the transmission of the uplink channel and/or the uplink signal comprises:
receiving first configuration information, wherein the first configuration information is configured to configure a physical downlink shared channel (PDSCH) transmission manner; and/or configured for the terminal to determine a frequency band where a component carrier (CC) for a PDSCH transmission is located; and
in response to the PDSCH transmission manner configured by the first configuration information being a target transmission manner, and/or the frequency band where the CC for the PDSCH transmission is located being in frequency range 1 (FR1), determining that the at least one joint TCI state is not used for the transmission of the uplink channel and/or the uplink signal, or determining that a path loss reference signal and/or uplink power control information indicated by the at least one joint TCI state is used for the transmission of the uplink channel and/or the uplink signal.

6. The method according to claim 5, wherein the target transmission manner comprises a coherent joint transmission (CJT).

7. The method according to claim 5, wherein the first configuration information is carried in a radio resource control (RRC), and the RRC is configured to configure the PDSCH transmission manner.

8. The method according to claim 7, further comprising:
receiving a third MAC CE,
wherein the third MAC CE indicates a numeric count of joint TCI states corresponding to a PDSCH; or
the third MAC CE indicates one or more joint TCI states, TCI states indicated by the third MAC CE correspond to the same codepoint, and an information field corresponding to the codepoint is comprised in a third DCI.

9. The method according to claim 7, further comprising:
receiving a fourth DCI,
wherein the fourth DCI indicates a numeric count of joint TCI states corresponding to a PDSCH; or
the fourth DCI indicates one codepoint, and the codepoint corresponds to one or more joint TCI states of the joint TCI states indicated by the indication information.

10. The method according to claim 7, further comprising:
receiving a fourth MAC CE and a fifth DCI,
wherein the fourth MAC CE indicates at least one first value, and the first value is a candidate value of a numeric count of joint TCI states corresponding to a PDSCH; and the fifth DCI indicates one codepoint, and the codepoint corresponds to one first value; or
the fourth MAC CE indicates one or more joint TCI states corresponding to a plurality of codepoints respectively, and the fifth DCI indicates one codepoint of the plurality of codepoints.

11. The method according to claim 1, further comprising:
receiving second configuration information, wherein the second configuration information indicate s whether the transmission of the uplink channel and/or the uplink signal adopts the at least one joint TCI state.

12. The method according to claim 11, wherein determining whether the at least one joint TCI state is used for the transmission of the uplink channel and/or the uplink signal comprises:
determining that the at least one joint TCI state is not used for the transmission of the uplink channel and/or the uplink signal, in response to the second configuration information indicating that the transmission of the uplink channel and/or the uplink signal does not adopt the at least one joint TCI state; or
determining that a path loss reference signal and/or uplink power control information indicated by the at least one joint TCI state is used for the transmission of the uplink channel and/or the uplink signal, in response to the second configuration information indicating that the transmission of the uplink channel and/or the uplink signal adopts the at least one joint TCI state.

13. The method according to claim 11, wherein the second configuration information comprises at least one of:
an RRC;
an MAC CE; or
a DCI.

14. The method according to claim 1, wherein determining whether the at least one joint TCI state is used for the transmission of the uplink channel and/or the uplink signal comprises:
determining that a path loss reference signal and/or uplink power control information indicated by the at least one joint TCI state is used for the transmission of the uplink channel and/or the uplink signal, in response to the at least one joint TCI state indicating the path loss reference signal and/or the uplink power control information; or
determining that the at least one joint TCI state is not used for the transmission of the uplink channel and/or the uplink signal, in response to the at least one joint TCI state not indicating a path loss reference signal and/or uplink power control information.

15. The method according to any one of claims 1 to 14, wherein the uplink channel comprises a physical uplink shared channel (PUSCH) and/or a physical uplink control channel (PUCCH); and/or
the uplink signal comprises a sounding reference signal (SRS) and/or a demodulation reference signal (DMRS).

16. A method for determining information, performed by a network device, comprising:
sending indication information, wherein the indication information indicates at least one joint TCI state.

17. The method according to claim 16, wherein the indication information is carried in a first MAC CE; and the first MAC CE indicates one or more joint TCI states.

18. The method according to claim 17, wherein TCI states indicated by the first MAC CE correspond to the same codepoint, and an information field corresponding to the codepoint is comprised in a first DCI.

19. The method according to claim 16, wherein the indication information is carried in a second MAC CE, wherein the second MAC CE indicates one or more joint TCI states corresponding to a plurality of codepoints respectively; and
the method further comprises:
sending a second DCI, wherein the second DCI indicates one codepoint of the plurality of codepoints.

20. The method according to claim 16, further comprising:
sending first configuration information, wherein the first configuration information is configured to configure a PDSCH transmission manner.

21. The method according to claim 20, wherein the first configuration information is carried in an RRC; and the RRC is configured to configure the PDSCH transmission manner.

22. The method according to claim 20, further comprising:
sending a third MAC CE,
wherein the third MAC CE indicates a numeric count of joint TCI states corresponding to a PDSCH; or
the third MAC CE indicates one or more joint TCI states, TCI states indicated by the third MAC CE correspond to the same codepoint, and an information field corresponding to the codepoint is comprised in a third DCI.

23. The method according to claim 20, comprising:
sending a fourth DCI,
wherein the fourth DCI indicates a numeric count of joint TCI states corresponding to a PDSCH; or
the fourth DCI indicates one codepoint, and the codepoint corresponds to one or more joint TCI states of the joint TCI states indicated by the indication information.

24. The method according to claim 20, further comprising:
sending a fourth MAC CE and a fifth DCI,
wherein the fourth MAC CE indicates at least one first value, and the first value is a candidate value of a numeric count of joint TCI states corresponding to a PDSCH; and the fifth DCI indicates one codepoint, and the codepoint corresponds to one first value; or
the fourth MAC CE indicates one or more joint TCI states corresponding to a plurality of codepoints respectively, and the fifth DCI indicates one codepoint of the plurality of codepoints.

25. The method according to claim 16, further comprising:
sending second configuration information, wherein the second configuration information indicates whether the transmission of the uplink channel and/or the uplink signal adopts the at least one joint TCI state.

26. The method according to claim 25, wherein the second configuration information comprises at least one of:
an RRC;
an MAC CE; or
a DCI.

27. The method according to any one of claims 16 to 26, wherein the uplink channel comprises a PUSCH and/or a PUCCH; and/or
the uplink signal comprises an SRS and/or a DMRS.

28. A communication apparatus, configured in a terminal, comprising:
a transceiving module configured to receive indication information, wherein the indication information indicates at least one joint TCI state; and
a processing module configured to determine whether the at least one joint TCI state is used for a transmission of an uplink channel and/or an uplink signal.

29. A communication apparatus, configured in a network device, comprising:
a transceiving module configured to send indication information, wherein the indication information indicates at least one joint TCI state.

30. A communication apparatus, comprising:
a processor; and
a memory having stored therein a computer program,
wherein the processor, when executing the computer program stored in the memory, causes the apparatus to perform the method according to any one of claims 1 to 15, or the processor, when executing the computer program stored in the memory, causes the apparatus to perform the method according to any one of claims 16 to 28.

31. A communication apparatus, comprising:
a processor; and
an interface circuit,
wherein the interface circuit is configured to receive code instructions and transmit the code instructions to the processor; and
the processor is configured to run the code instructions to perform the method according to any one of claims 1 to 15, or is configured to run the code instructions to perform the method according to any one of claims 16 to 27.

32. A computer-readable storage medium for storing instructions that, when executed, cause the method according to any one of claims 1 to 15 to be implemented, or when executed, cause the method according to any one of claims 16 to 27 to be implemented.
